# FASCICULE DE BREVET EUROPEEN

(11) **EP 2 125 134 B1**
(45) Date de publication et mention de la délivrance du brevet: **11.09.2013**
(21) Numéro de dépôt: 08717179.9
(22) Date de dépôt: 27.02.2008
(51) Int. Cl.: B01D 3/14, C02F 1/04, C02F 101/38

(54) **PROCEDE DE TRAITEMENT D'EFFLUENTS AQUEUX COMPRENANT DES AMINES AROMATIQUES**
VERFAHREN ZUR BEHANDLUNG VON AROMATISCHEN AMINO-VERBINDUNGEN ENTHALTENDEN ABWÄSSERN
PROCESS FOR TREATING AQUEOUS EFFLUENTS COMPRISING AROMATIC AMINO COMPOUNDS

(30) Priorité: 01.03.2007 FR 0701489
(43) Date de publication de la demande: 02.12.2009
(73) Titulaire: Vencorex France, 69800 Saint-Priest (FR)
(72) Inventeur: MARION, Philippe, F-69390 Vernaison (FR)
(74) Mandataire: Jacobson, Claude
(86) Numéro de dépôt international: PCT/EP2008/052372
(87) Numéro de publication internationale: WO 2008/107350

(56) Documents cités:
- EP-A- 0 401 631
- EP-A- 1 122 215
- WO-A-02/081379
- GB-A- 1 367 511
- US-A- 3 421 983

## Description

La présente invention a pour objet un procédé de traitement d'effluents aqueux comprenant des amines aromatiques.

L'invention vise particulièrement la purification de flux aqueux comprenant de très faibles quantités d'amines aromatiques associées à des impuretés organiques résultant de leur dégradation ou coproduites lors de l'hydrogénation du composé nitroaromatique correspondant.

Au cours de la fabrication de certaines amines aromatiques, par hydrogénation catalytique du composé nitré correspondant, il y a coproduction au cours de la réaction, d'eau en quantités qui peuvent s'avérer importantes.

Ainsi, lors de l'hydrogénation du dinitrotoluène (DNT) en toluènediamine (TDA), la quantité d'eau formée est évaluée à 590 kg par tonne de toluènediamine formée.

Les eaux résiduaires obtenues contiennent outre la TDA, des quantités non négligeables de dérivés généralement aminés résultant de réactions d'hydrogénolyse de l'amine aromatique ou de perhydrogénation du cycle aromatique, qui sont écotoxiques et qui doivent être obligatoirement éliminées avant le rejet des eaux dans le milieu naturel.

D'autre part, ces eaux se colorent rapidement sous l'action de l'oxygène, de l'air et/ou de la lumière.

Ces eaux aminées constituent un effluent aqueux qui, dans le procédé de préparation de toluènediisocyanate, est l'une des sources majeures de carbone organique total (COT) et d'azote ammoniacal et organique.

La pollution organique s'exprime habituellement, par le dosage du carbone organique total COT qui est effectué conformément à la norme NF EN1484 de Juillet 97 : " Analyses de l'eau - lignes directrices pour le dosage du carbone organique total et du carbone organique dissous".

Pour ce qui est du dosage de l'azote présent dans les rejets, il est effectué selon la méthode Kjeldahl, selon la norme NF EN25663 (iso 5663) de Janvier 1994 : " Qualité de l'eau - dosage de l'azote Kjeldahl".

Les contraintes environnementales sont très importantes en matière de rejets d'eaux usées et diverses méthodes ont été proposées pour traiter ce type d'effluents aminés.

Différents procédés d'oxydation sont décrits dans la littérature. Il est proposé selon EP-A 0084285 de détruire les amines primaires aromatiques présentes dans les eaux résiduaires par un traitement à l'aide d'un mélange sulfonitrique ou à l'aide de divers autres agents oxydants comme le chlore (JP-B 49023703), le persulfate de sodium (JP-A 53063763), le peroxyde d'hydrogène (JP-2144194), le chlore et l'hypochlorite de sodium (JP-49079050).

Il est également possible d'opérer une ozonisation comme décrit dans SU 159926.

Différents traitements biologiques ont également été proposés. On peut citer notamment EP-A 0 126 394 qui revendique l'élimination des composés aromatiques hydroxylés et aminés par un traitement enzymatique des eaux usées effectué à l'aide d'une peroxydase.

Par ailleurs, des traitements physico-chimiques par exemple à l'aide de résines, sont préconisés pour des eaux comprenant de l'o-phénylènediamine (CN 1048019) ou des précipitations chimiques avec des aldéhydes (JP-A 51028358).

Les différents procédés décrits dans l'état de la technique sont soit très coûteux en investissement et/ou en fonctionnement, soit très générateurs de sous-produits salins conduisant à une pollution des rejets.

Le problème à la base de l'invention est donc de fournir un procédé économique de traitement des effluents aqueux ayant une très faible teneur en impuretés à éliminer.

Par ailleurs, l'effluent rejeté ne doit pas modifier la couleur du milieu naturel.

La présente invention a précisément t pour objet un procédé de traitement d'un effluent aqueux *(F₁)* selon revendication 1 comprenant une amine aromatique et des impuretés organiques légères telles comme définies ci-dessus et correspondant à une teneur en COT inférieure à 1 % en poids caractérisé par le fait que l'on soumet le flux *(F₁)* à une opération de distillation conçue pour obtenir :
- en pied de distillation, un flux liquide *(F₃)* d'une solution aqueuse de l'amine aromatique,
- en tête de distillation un flux gazeux *(F₂)* comprenant ces impuretés légères,
- dans une zone supérieure à l'alimentation du flux *(F₁)*, un flux liquide *(F₄)* d'eau épurée.

Dans le présent texte, on entend par « amine aromatique », un composé benzénique substitué ou non, dont au moins un atome d'hydrogène directement lié au noyau aromatique est remplacé par un groupe amine primaire.

Par « impuretés légères », on entend l'ammoniaque (ou l'ammoniac) et les impuretés organiques légères qui sont notamment des cycles aromatiques ou non, substitués ou non par des fonctions amine, cétone ou alcool.

Ces impuretés peuvent résulter de la perhydrogénation du cycle aromatique avec ou sans hydrolyse et/ou hydrogénolyse des produits intermédiaires formés.

Ces impuretés peuvent résulter de l'hydrogénation d'impuretés co-produites lors de la nitration du cycle aromatique.

Ces impuretés peuvent également résulter de l'hydrogénolyse de la fonction amine de l'amine aromatique.

Par « effluent aqueux », on entend, toute solution aqueuse comprenant des impuretés dont au moins une amine aromatique dont la concentration exprimée en COT et définie dans le présent texte, est faible.

D'une manière préférée, le procédé de l'invention s'applique tout particulièrement au traitement des effluents comprenant de la TDA et obtenus suite à un procédé d'hydrogénation catalytique du dinitrotoluène.

Selon la présente invention, il a été découvert que l'amine aromatique et les impuretés l'accompagnant pouvaient être éliminées d'une manière efficace en effectuant une opération de distillation sur l'effluent aqueux les comprenant.

Il n'était pas du tout évident que l'on puisse séparer les impuretés du flux aqueux en raison de la très faible concentration de la pollution organique qui représente moins de 10 % du poids du flux aqueux.

Il ne pouvait en aucun cas être prévu que l'ammoniac présent dans le flux serait bien bloqué dans la partie supérieure de la colonne à distiller.

Par ailleurs, afin de condenser l'ammoniac en tête de colonne, il est nécessaire de refroidir avec une eau froide (de l'ordre de 15°C) et il y avait lieu à s'attendre à des problèmes de bouchage des tuyauteries dus à certains produits organiques qui se solidifient au-dessus de 15°C.

Compte tenu de ce qui vient d'être exposé, le choix de l'opération de distillation d'un flux très peu chargé en impuretés ne s'imposait pas à l'évidence pour l'Homme du Métier.

Le procédé de l'invention s'applique à tout flux aqueux comprenant une amine aromatique et des impuretés légères telles que précédemment définies et entraînables à la vapeur d'eau.

Dans le cadre de l'invention, il est possible de traiter les effluents résultant de l'hydrogénation catalytique d'un composé nitroaromatique répondant à la formule suivante : 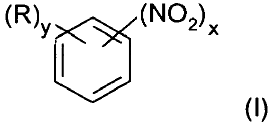 dans ladite formule :
- x est un nombre allant de 1 à 3,
- y est un nombre allant de 0 à 4,
- les groupes R, identiques ou différents, représentent un groupe alkyle ou alkoxy, linéaire ou ramifié ayant de 1 à 12 atomes de carbone, un groupe hydroxyle, un atome d'halogène, un groupe trihalogénométhyle.

Il convient tout à fait bien aux composés nitroaromatiques répondant à la formule (I) dans laquelle R représente un groupe alkyle linéaire ou ramifié ayant de 1 à 4 atomes de carbone, un atome de chlore, un atome de fluor, un groupe trifluorométhyle.

Dans la formule (I), x est de préférence égal à 1 ou 2.

Dans la formule (I), y est de préférence égal à 0, 1 ou 2.

Lors de l'hydrogénation du composé nitroaromatique de formule (I), on obtient une amine aromatique de formule (II) : 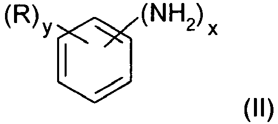 dans ladite formule, x, y et R ont la signification donnée précédemment.

Ainsi, l'invention vise particulièrement l'élimination dans les eaux résiduaires des amines aromatiques (et de leurs impuretés) suivantes : l'aniline, la toluidine, la p-isopropylaniline, la chloroaniline, les toluylènediamines, le p-aminophénol, l'o-aminophénol, la 2,4-difluoroaniline, la 3,4-dichloroaniline, la 2,4-dichloroaniline.

Il est à noter que l'invention s'applique également aux mélanges d'amines, en particulier aux mélanges d'isomères obtenus au cours du procédé de synthèse desdites amines.

Par exemple, la 2,4-toluène diamine est co-produite avec la 2,6-toluène diamine. Il s'agit d'un mélange comprenant généralement 80 ± 1 % de 2,4-toluène diamine et 20 ± 1 % de 2,6-toluène diamine ainsi qu'à titre d'impuretés en une teneur généralement inférieure à 5 %, les autres isomères : 2,3-toluènediamine, 2,5- toluènediamine, 3,4- toluènediamine et 3,5-toluènediamine.

Ledit mélange dénommé « TDA » est obtenu par hydrogénation catalytique du mélange correspondant de 2,4-dinitrotoluène et de 2,6-dinitrotoluène obtenu suite à la nitration du toluène.

Le procédé de l'invention ne s'applique pas sur le flux aqueux obtenu directement après l'hydrogénation catalytique mais après que celui-ci ait subi une première distillation.

Les composés nitroaromatiques en particulier les dinitrotoluènes sont hydrogénés en présence d'un catalyseur qui peut être de nature variée, nickel supporté, nickel de Raney, métal noble supporté tel que palladium, platine, rhodium etc..

La réaction d'hydrogénation peut être conduite en l'absence ou en présence d'un solvant organique, de préférence un alcool ou un éther et plus particulièrement l'isopropanol ou le tétrahydrofurane.

Ces procédés sont largement décrits dans la littérature.

Au cours de la réaction, il y a formation de 2 molécules d'eau par fonction nitro.

On obtient en fin d'hydrogénation une solution aqueuse d'amine aromatique. Dans le cas de la TDA, on obtient une solution aqueuse de TDA à environ 50 à 65 %, de préférence aux environs de 60 % en poids.

Pour isoler la TDA à partir du mélange réactionnel, une méthode actuellement connue consiste à effectuer la distillation dudit mélange permettant d'obtenir en tête de distillation l'eau, l'ammoniaque et des impuretés organiques légères, des traces de TDA et en pied de distillation un mélange comprenant essentiellement la TDA, associée à une faible quantité d'eau : celle-ci représentant moins de 10 % du poids de TDA.

Par traces de TDA, on entend une concentration en TDA inférieure à 0,1 % en poids.

L'invention propose d'éliminer les impuretés de l'effluent aqueux récupéré en tête de distillation.

Ledit effluent aqueux comprend des traces de TDA, de l'ammoniaque, des impuretés organiques légères telles que notamment celles mentionnées ci-après.

Par perhydrogénation du cycle aromatique suivie d'hydrogénolyse de la fonction amine, on obtient comme impuretés, dans l'effluent, des dérivés du cyclohexane essentiellement des isomères méthylcyclohexylamines, méthylcyclohexanones, méthylcyclohexanols : ces deux derniers résultant de l'hydrolyse de produits intermédiaires formés de type imine.

Par hydrogénation des impuretés co-produites à la nitration, on peut noter la présence de toluidines.

Par hydrogénolyse d'une fonction amine de la TDA, on peut noter la présence de toluidines.

Classiquement, la pollution organique est exprimée par la détermination du carbone organique total.

L'effluent aqueux mis en oeuvre dans le procédé de l'invention comprend moins de 0,5 %, de préférence moins de 0,15 % en poids, et de préférence de 0,07 à 0,15 % en poids de carbone organique total (COT).

L'effluent aqueux mis en oeuvre dans le procédé de l'invention comprend moins de 0,25 %, de préférence moins de 0,15 % en poids, et de préférence de 0,06 à 0,15 % en poids d'ammoniaque exprimée en NH₄⁺.

Conformément au procédé de l'invention, on traite ledit effluent aqueux ayant une faible concentration d'impuretés.

Conformément au procédé de l'invention, on effectue une opération de distillation qui assure la séparation de l'eau, des impuretés avec d'une part l'amine aromatique et d'autre part l'ammoniaque et les impuretés organiques légères.

On soumet donc le flux aqueux *(F₁)* à une opération de distillation permettant d'obtenir :
- en pied de distillation, un flux liquide *(F₃)* d'une solution aqueuse de l'amine aromatique,
- en tête de distillation un flux gazeux *(F₂)* comprenant les impuretés légères,
- dans une zone supérieure à l'alimentation du flux *(F₁)*, un flux liquide *(F₄)* d'eau épurée.

L'étape de distillation est conduite à une température comprise entre 50°C et 115°C sous une pression comprise entre 0,3 et 1,5 bar, de préférence sous pression atmosphérique, la pression étant mesurée en tête de colonne.

Elle est effectuée dans un appareil de distillation classique.

L'Homme du Métier est parfaitement en mesure de choisir les moyens à mettre en oeuvre en fonction de la séparation à effectuer.

On rappellera simplement ce qui suit. La taille (notamment le diamètre) des colonnes de distillation dépend du flux circulant et de la pression interne. Leur dimensionnement se fera donc principalement suivant le débit de mélange à traiter. Le paramètre interne qu'est le nombre d'étages théoriques est déterminé notamment par la composition du flux de départ et des puretés requises.

On précisera que les colonnes pourront être garnies indifféremment de plateaux ou de garnissage ordonné, comme cela est parfaitement connu de l'Homme du Métier.

L'installation étant déterminée, l'Homme du Métier ajuste les paramètres de fonctionnement de la colonne.

Ainsi, la colonne de distillation pourra être avantageusement, mais non limitativement, une colonne ayant les spécifications suivantes :
- nombre d'étages théoriques : de 1 à 10, de préférence de 7 à 9,
- taux de reflux R compris entre 50 et 120, de préférence entre 60 et 90.

Le taux de reflux est défini par le rapport du débit du flux *(F₆)* réinjecté de la tête de la colonne vers l'intérieur de la colonne rapporté au débit de flux *(F₇)* envoyé à la destruction.

Pour effectuer la distillation, l'apport des calories en pied de colonne peut être fait notamment par un échangeur tubes calandre chauffé à la vapeur ou par un fluide caloporteur, par l'intermédiaire de serpentins de chauffage alimentés à la vapeur ou par un fluide caloporteur ou par tout autre dispositif équivalent.

Un mode de réalisation préféré consiste à chauffer le flux aqueux *(F₁)*, en pied de distillation dans un échangeur thermique par prélèvement d'un flux *(F₅)* en pied qui circule en boucle. Plus précisément, le flux *(F₅)* sort en pied de distillation et traverse de bas en haut, un échangeur thermique et en sortie d'échangeur, il est introduit latéralement dans la partie inférieure de la colonne de distillation.

Un autre mode d'exécution de l'invention, consiste à remplacer la colonne de distillation équipée de moyens de chauffage par un ensemble comprenant un bouilleur surmonté d'une colonne de distillation.

On introduit le flux aqueux *(F₁)* dans la colonne de distillation, soit sous forme liquide, soit sous forme vapeur ou soit sous forme vapeur et liquide pour optimiser le coût énergétique du traitement.

On effectue l'alimentation de la colonne de distillation dans la partie inférieure de la colonne.

L'alimentation se situe à un ou deux étages au dessus du bouilleur. Il est également possible de faire l'alimentation dans le bouilleur.

En bas de colonne, on récupère un flux d'amine aromatique *(F₃)* qui est une solution aqueuse d'amine aromatique peu concentrée en amine aromatique. Sa teneur varie généralement entre 0,005 % et 0,2 %.

Selon une variante de l'invention, on élimine l'eau du flux *(F₃)* par distillation dans une deuxième colonne à distiller.

La température de distillation est fonction de la nature de l'amine aromatique et de la pression de distillation.

Dans le cas de la distillation de la TDA, la température de distillation, sous pression atmosphérique, mesurée en pied de colonne varie entre 95°C et 105°C, de préférence aux environs de 102°C.

On récupère en tête de cette deuxième colonne de l'eau et en pied de colonne, le flux de TDA qui peut être recyclé en amont du procédé.

En tête de la première colonne, on récupère une phase gazeuse *(F₂)* comprenant de l'ammoniaque, les impuretés organiques légères et de l'eau.

La condensation du flux est effectuée par passage dans un échangeur thermique refroidi à une température de 100°C à 55°C.

Le condenseur est généralement un échangeur thermique dans lequel circule un liquide réfrigérant tel que par exemple de l'eau et/ou du glycol ou des solvants aromatiques chlorés comme par exemple le monochlorobenzène et l'o-dichlorobenzène.

On récupère en sortie du condenseur, un liquide condensé qui est une phase liquide bi-phasique qui est ensuite séparée en deux phases : une phase organique *(F₇)* rassemblant les impuretés légères qui sont ensuite envoyées à la destruction et une phase aqueuse *(F₆)* qui peut être ou non recyclée sur la colonne de distillation.

L'opération de séparation des phases organique et aqueuse est faite dans un décanteur classique tel que par exemple un décanteur à débordement ou de type florentin.

L'alimentation en retour de la colonne par le flux (F₆) se fait en tête de colonne et généralement, latéralement.

Dans une zone supérieure à l'alimentation du flux aqueux *(F₁)*, on soutire un flux *(F₄)* liquide comprenant de l'eau contenant une concentration d'amine conforme à la législation qui peut éventuellement être recyclé.

L'invention permet donc de séparer trois flux :
- en latéral, on soutire un flux liquide *(F₄)* correspondant à la majorité du flux ; au moins 80 % du flux d'alimentation *(F₁)* qui est de l'eau épurée rejetable, sans traitement dans le milieu naturel,
- en tête, on soutire un flux représentant moins de 5 % du flux d'alimentation *(F₁)* qui est très concentré en impuretés légères,
- en pied, on soutire un flux *(F₃)* comprenant essentiellement l'amine aromatique représentant moins de 15 % du flux d'alimentation *(F₁)*.

Conformément au procédé de l'invention, la quasi-totalité de l'eau entrant dans la colonne peut être rejetée dans le milieu naturel, dès la sortie de la colonne.

Le procédé de l'invention est intéressant car il permet de concentrer la majorité de la pollution organique et de l'ammoniaque dans moins de 5 % du flux. Cette eau concentrée en produits organiques peut être traitée ainsi de manière beaucoup plus efficace, voire être incinérée dans un dispositif approprié.

Le procédé de l'invention est mis en oeuvre dans une installation comprenant :
- une colonne de distillation équipée en pied de moyens de chauffage conçue pour séparer l'eau, l'amine aromatique et les impuretés légères à partir du flux aqueux *(F₁)*,
- un ou deux condenseurs situés à la sortie du flux gazeux récupéré en tête de colonne de distillation conçus pour assurer la séparation de l'eau des impuretés légères.

Les différents appareillages sont reliés par des tuyauteries assurant la circulation et le recyclage des réactifs.

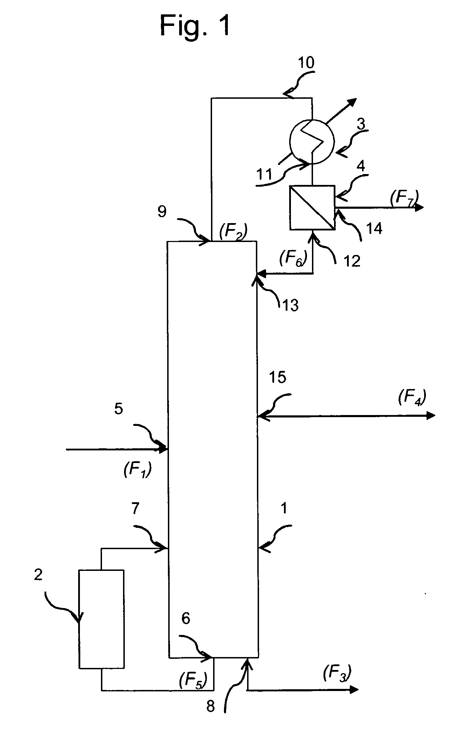

Un mode de réalisation pratique de l'invention est illustré par le dessin annexé sous forme de la figure 1.

La figure 1 est une vue latérale schématique d'un appareillage adapté à la mise en oeuvre de l'invention.

L'ensemble comprend une colonne de distillation (1), un bouilleur (2), un condenseur (3) placé en tête de colonne et un décanteur (4) relié à la sortie du condenseur.

Le flux *(F₁)* est introduit en (5), dans la colonne de distillation (1).

L'introduction se fait latéralement sur la colonne de distillation de préférence dans la partie basse de la colonne.

En pied de colonne en (6), le flux *(F₅)* est chauffé extérieurement à la colonne en faisant circuler le flux *(F₅)* dans une boucle qui traverse le bouilleur (2).

Il est ensuite réintroduit latéralement en (7) sur la colonne de distillation.

Au niveau de la partie basse de la colonne, on récupère en (8), un flux *(F₃)* comprenant l'amine aromatique en solution aqueuse.

Dans une zone supérieure à l'alimentation du flux aqueux *(F₁)*, on soutire en (15), un flux *(F₄)* liquide comprenant de l'eau épurée contenant moins de 20 % du COT initial qui peut éventuellement être recyclé ou rejeté dans la nature.

En tête de distillation, on obtient une phase gazeuse *(F₂)* comprenant de l'ammoniaque, les impuretés organiques légères et de l'eau.

En partie haute de la colonne se trouvent les moyens pour traiter le flux gazeux issu de la colonne de distillation (1).

Le flux gazeux *(F₂)* récupéré en tête de colonne en (9) qui sort par la tuyauterie (10) est envoyé dans un condenseur (3).

On récupère en sortie (11) un liquide condensé qui est une phase liquide bi-phasique qui est ensuite introduite dans un décanteur (4) ce qui permet la séparation en (14) d'une phase organique *(F₇)* rassemblant les impuretés légères qui sont ensuite envoyées à la destruction et en (12) une phase aqueuse *(F₆)* qui est recyclée sur la colonne en (13).

Comme mentionné précédemment, on récupère en pied de colonne, en (8), un flux *(F₃)* qui est une solution aqueuse de l'amine aromatique.

Selon une variante de l'invention, le flux *(F₃)* récupéré en pied de colonne (1) est introduit dans une deuxième colonne de distillation non représentée sur la figure 1 et conçue pour récupérer en tête de colonne de l'eau et en pied de colonne, le flux de l'amine aromatique qui peut être recyclé notamment en amont du procédé.

Le traitement de l'effluent aqueux est donc effectué dans un appareillage classique et il permet d'atteindre la qualité de l'eau recherchée tout en permettant le recyclage de l'amine aromatique.

L'invention va être maintenant décrite plus en détail à l'aide de modes de réalisation pris à titre d'exemples non limitatifs et se référant au dessin de la figure 1 qui montre un schéma d'une installation conforme à l'invention.

### Exemple 1

Le flux *(F₁)* alimente en pied, une colonne ayant 8 étages théoriques qui fonctionne sous pression atmosphérique et avec un taux de reflux de 75.

Ce flux de 9200 kg/h, à une température de 70°C, contient 1180 mg/L de COT correspondant environ à 1570 ppm de composés organiques (TDA, toluidine, méthylcyclohexylamine, méthylcyclohexanol et méthylcyclohexanone) et 874 mg/L d'azote ammoniacal.

Le flux *(F₃)* de 1000 kg/h à 102 °C est recyclé dans le procédé.

Il est composé de 100 mg/L de COT, 130 ppm de composés organiques et de 70 mg/L d'azote ammoniacal.

Le soutirage latéral *(F₄)* s'effectue un étage théorique au-dessus du bouilleur, à un débit de 8080 kg/h et une température de 101 °C.

Il est composé de 92 mg/L de COT, 120 ppm de composés organiques et de 64 mg/L d'azote ammoniacal.

En tête de colonne, le flux *(F₂)* de 9920 kg/h de vapeur à 97°C est refroidi à 55°C, puis 9800 kg/h vont en reflux et les 120 kg/h restant sont envoyés en destruction.

Dans cette configuration, l'option du décanteur n'a pas été utilisée afin de piéger un maximum d'ammoniac dans la phase aqueuse.

Ce flux concentré en composés organiques a ainsi un COT de 82 g/L, 11 % en poids de composés organiques et 62 g/L d'azote ammoniacal.

Ainsi, on constate que selon l'invention, on parvient à éliminer plus de 93 % des polluants initiaux (COT, azote ammoniacal et organique) alors que déjà, le flux aqueux *(F₁)* traité est très faiblement chargé en impuretés.

### Exemple 2

Dans cet exemple, on modifie le débit qui est un débit nominal inférieur à celui de l'exemple 1.

Le flux *(F₁)* alimente en pied, une colonne ayant 8 étages théoriques qui fonctionne sous pression atmosphérique et avec un taux de reflux de 70.

Ce flux de 8380 kg/h, à une température de 70 °C, contient 1300 mg/L de COT, 1690 ppm de composés organiques et 950 mg/L d'azote ammoniacal.

Le flux *(F₃)* de 1000 kg/h à 102 °C est recyclé dans le procédé.

Il est composé de 80 mg/L de COT, 130 ppm de composés organiques et de 67 mg/L d'azote ammoniacal.

Le soutirage latéral *(F₄)* s'effectue un étage théorique au-dessus du bouilleur, à un débit de 7250 kg/h et une température de 101 °C.

Il est composé de 107 mg/L de COT, 120 ppm de composés organiques et de 66 mg/L d'azote ammoniacal.

En tête de colonne, le flux *(F₂)* de 9230 kg/h de vapeur à 97°C est refroidi à 55°C, puis 9100 kg/h vont en reflux et les 130 kg/h restant sont envoyés en destruction.

Ce flux concentré en composés organiques a ainsi un COT de 77 g/L, 10 % de composés organiques et 57g/L d'azote ammoniacal.

## Revendications

1. Procédé de traitement d'un effluent aqueux *(F₁)* comprenant une amine aromatique et des impuretés organiques légères qui sont des cycles aromatiques ou non, substitués ou non par des fonctions amine, cétone ou alcool, résultant de la dégradation de l'amine aromatique et co-produites lors de réactions d'hydrogénation ou de perhydrogénation du cycle aromatique de l'amine aromatique, et correspondant à une teneur en COT inférieure à 1 % en poids **caractérisé par le fait que** l'on soumet le flux *(F₁)* à une opération de distillation conçue pour obtenir :
- en pied de distillation, un flux liquide *(F₃)* d'une solution aqueuse de l'amine aromatique,
- en tête de distillation un flux gazeux *(F₂)* comprenant ces impuretés organiques légères
- dans une zone supérieure à l'alimentation du flux *(F₁)*, un flux liquide *(F₄)* d'eau épurée.

2. Procédé selon la revendication 1 **caractérisé par le fait que** l'effluent aqueux comprend au moins une amine aromatique de formule (II) : 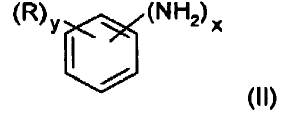 dans ladite formule,
- x est un nombre allant de 1 à 3,
- y est un nombre allant de 0 à 4,
- les groupes R, identiques ou différents, représentent un groupe alkyle ou alkoxy, linéaire ou ramifié ayant de 1 à 12 atomes de carbone, un groupe hydroxyle, un atome d'halogène, un groupe trihalogénométhyle,

3. Procédé selon la revendication 2 **caractérisé par le fait que** l'effluent aqueux comprend une amine aromatique répondant à la formule (II) dans laquelle R représente un groupe alkyle linéaire ou ramifié ayant de 1 à 4 atomes de carbone, un atome de chlore, un atome de fluor, un groupe trifluorométhyle.

4. Procédé selon l'une des revendications 1 à 3 **caractérisé par le fait que** l'effluent aqueux comprend une amine aromatique répondant à la formule (II) dans laquelle x est égal à 1 ou 2.

5. Procédé selon l'une des revendications 1 à 4 **caractérisé par le fait que** l'effluent aqueux comprend une amine aromatique répondant à la formule (II) dans laquelle y est égal à 0, 1 ou 2.

6. Procédé selon l'une des revendications 1 à 5 **caractérisé par le fait que** l'effluent aqueux comprend une amine aromatique telle que l'aniline, la toluidine, la p-isopropylanitine, la chloroaniline, les toluylènediamines, le p-aminophénol, l'o-aminophénol, la 2,4-difluoroaniline, la 3,4-dichloroaniline, la 2,4-dichloroaniline.

7. Procédé selon l'une des revendications 1 à 6 **caractérisé par le fait que** l'effluent aqueux comprend un mélange de 2,4-toluène diamine et de 2,6-toluène diamine ainsi que des impuretés résultant de réactions de perhydrogénation du cycle aromatique et/ou d'hydrogénation d'impuretés co-produites à la nitration et/ou d'hydrogénolyse d'une fonction amine de la TDA.

8. Procédé selon la revendication 7 **caractérisé par le fait que** l'effluent aqueux est obtenu par hydrogénation catalytique du mélange correspondant de 2,4-dinitrotoluène et de 2,6-dinitrotoluène obtenu suite à la nitration du toluène conduisant à une solution aqueuse de TDA qui est soumise à une première distillation permettant d'obtenir en tête de distillation l'eau, l'ammoniaque et des impuretés organiques légères, des traces de TDA et en pied de distillation un mélange comprenant essentiellement la TDA.

9. Procédé selon l'une des revendications 1 à 8 **caractérisé par le fait que** l'on soumet le flux aqueux *(F₁)* à une opération de distillation à une température comprise entre 50°C et 115°C.

10. Procédé selon l'une des revendications 1 à 9 **caractérisé par le fait que** l'on soumet le flux aqueux *(F₁)* à une opération de distillation sous une pression comprise entre 0,3 et 1,5 bar, de préférence sous pression atmosphérique.

11. Procédé selon l'une des revendications 1 à 10 **caractérisé par le fait que** l'on chauffe le flux aqueux *(F₁),* en pied de distillation dans un échangeur thermique par prélèvement d'un flux *(F₅)* qui sort en pied de distillation et traverse de bas en haut, un échangeur thermique et qui est, en sortie d'échangeur, introduit latéralement dans la partie inférieure de la colonne de distillation.

12. Procédé selon l'une des revendications 1 à 11 **caractérisé par le fait que** l'on introduit le flux aqueux *(F₁)* soit sous forme liquide, soit sous forme vapeur ou soit sous forme vapeur et liquide.

13. Procédé selon l'une des revendications 1 à 12 **caractérisé par le fait que** l'on soutire dans une zone supérieure à l'alimentation du flux aqueux *(F₁)*, un flux *(F₄)* liquide comprenant de l'eau qui peut éventuellement être recyclé.

14. Procédé selon l'une des revendications 1 à 13 **caractérisé par le fait que** l'on sépare trois flux :
- en latéral, on soutire un flux liquide *(F₄)* correspondant à la majorité du flux ; au moins 80 % du flux d'alimentation *(F₁)* qui est de l'eau épurée rejetable, sans traitement dans le milieu naturel,
- en tête, on soutire un flux représentant moins de 5 % du flux d'alimentation *(F₁)* qui est très concentré en impuretés légères,
- en pied, on soutire un flux *(F₃)* comprenant essentiellement l'amine aromatique représentant moins de 15 % du flux d'alimentation *(F₁)*.

15. Procédé selon l'une des revendications 1 à 14 **caractérisé par le fait que** l'on concentre la majorité de la pollution organique et de l'ammoniaque dans moins de 5 % du flux.

## Patentansprüche

1. Verfahren zur Behandlung eines wässrigen Ausflusses (F₁), der ein aromatisches Amin und leichte organische Verunreinigungen, die aromatische oder nicht-aromatische Cyclen, die durch Amin-, Keton- oder Alkohol-Funktionen substituiert sind oder nicht, sind und aus dem Abbau des aromatischen Amins resultieren und bei Hydrierung- oder Perhydrierungsreaktionen des aromatischen Cyclus des aromatischen Amins mit produziert werden, und einem Gehalt an COT von unter 1 Gew.-% entsprechen, **dadurch gekennzeichnet, dass** man den Fluss (F₁) einem Destillationsvorgang unterwirft, der konzipiert ist, um zu erhalten:
- am Boden der Destillation einen flüssigen Fluss (F₃) einer wässrigen Lösung des aromatischen Amins,
- am Kopf der Destillation einen gasförmigen Fluss (F₂), der diese leichten organischen Verunreinigungen umfasst,
- in einer Zone über der Einspeisung des Flusses (F₁) einen flüssigen Fluss (F₄) von gereinigtem Wasser.

2. Verfahren nach Anspruch 1, **dadurch gekennzeichnet, dass** der wässrige Ausfluss wenigstens ein aromatisches Amin der Formel (II) umfasst: 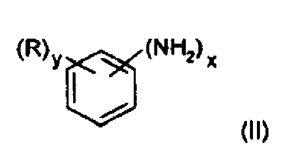 wobei in der Formel
- x eine Zahl von 1 bis 3 ist,
- y eine Zahl von 0 bis 4 ist,
- die Gruppen R, die gleich oder verschieden sind, eine lineare oder verzweigte Alkyl- oder Alkoxygruppe mit 1 bis 12 Kohlenstoffatomen, eine Hydroylgruppe, ein Halogenatom, eine Trihalogenmethylgruppe darstellen.

3. Verfahren nach Anspruch 2, **dadurch gekennzeichnet, dass** der wässrige Ausfluss ein aromatisches Amin umfasst, das der Formel (II) entspricht, in der R eine lineare oder verzweigte Alkylgruppe mit 1 bis 4 Kohlenstoffatomen, ein Chloratom, ein Fluoratom, eine Trifluormethylgruppe darstellt.

4. Verfahren nach einem der Ansprüche 1 bis 3, **dadurch gekennzeichnet, dass** der wässrige Ausfluss ein aromatisches Amin umfasst, das der Formel (II), in der x 1 oder 2 ist, entspricht.

5. Verfahren nach einem der Ansprüche 1 bis 4, **dadurch gekennzeichnet, dass** der wässrige Ausfluss ein aromatisches Amin umfasst, das der Formel (II), in der y gleich 0, 1 oder 2 ist, entspricht.

6. Verfahren nach einem der Ansprüche 1 bis 5, **dadurch gekennzeichnet, dass** der wässrige Ausfluss ein aromatisches Amin wie zum Beispiel Anilin, Toluidin, p-Isopropylanilin, Chloranilin, Toluylendiamine, p-Aminophenol, o-Aminophenol, 2,4-Difluoranilin, 3,4-Dichloranilin, 2,4-Dichloranilin umfasst.

7. Verfahren nach einem der Ansprüche 1 bis 6, **dadurch gekennzeichnet, dass** der wässrige Ausfluss ein Gemisch aus 2,4-Toluoldiamin und 2,6-Toluoldiamin sowie Verunreinigungen, die aus Perhydrierungsreaktionen des aromatischen Cyclus und/oder der Hydrierungsreaktionen von Verunreinigungen resultieren, die gleichzeitig mit der Nitrierung und/oder Hydrogenolyse einer Aminfunktion des TDA produziert werden, umfasst.

8. Verfahren nach Anspruch 7, **dadurch gekennzeichnet, dass** der wässrige Ausfluss durch katalytische Hydrierung des entsprechenden Gemisches aus 2,4-Dinitrotoluol und 2,6-Dinitrotoluol, erhalten nach Nitrierung von Toluol, erhalten wird, die zu einer wässrigen Lösung von TDA führt, die einer ersten Destillation unterzogen wird, die es erlaubt, am Kopf der Destillation Wasser, Ammoniak und leichte organische Verunreinigungen, Spuren von TDA und am Boden der Destillation ein Gemisch, das im Wesentlichen TDA umfasst, zu erhalten.

9. Verfahren nach einem der Ansprüche 1 bis 8, **dadurch gekennzeichnet, dass** man den wässrigen Fluss (F₁) einem Destillationsvorgang bei einer Temperatur zwischen 50 °C und 115 °C unterwirft.

10. Verfahren nach einem der Ansprüche 1 bis 9, **dadurch gekennzeichnet, dass** man den wässrigen Fluss (F₁) einem Destillationsvorgang unter einem Druck zwischen 0,3 und 1,5 bar, vorzugsweise unter Atmosphärendruck, unterwirft.

11. Verfahren nach einem der Ansprüche 1 bis 10, **dadurch gekennzeichnet, dass** man den wässrigen Fluss (F₁) am Boden der Destillation in einem Wärmetauscher durch Entnahme eines Flusses (F₅), der am Boden der Destillation austritt und von unten nach oben einen Wärmetauscher durchläuft und der beim Ausgang des Wärmetauschers seitlich in den unteren Teil der Destillationssäule eingeführt wird, erwärmt wird.

12. Verfahren nach einem der Ansprüche 1 bis 11, **dadurch gekennzeichnet, dass** man den wässrigen Ausfluss (F₁) entweder in flüssiger Form oder in Dampfform oder in Dampfform und flüssiger Form einführt.

13. Verfahren nach einem der Ansprüche 1 bis 12, **dadurch gekennzeichnet, dass** man in einer Zone über der Einspeisung des wässrigen Ausflusses (F₁) einen flüssigen Fluss (F₄) abzweigt, der Wasser umfasst und der gegebenenfalls recycelt werden kann.

14. Verfahren nach einem der Ansprüche 1 bis 13, **dadurch gekennzeichnet, dass** man drei Flüsse abtrennt:
- seitlich zweigt man einen flüssigen Fluss (F₄) ab, der den größten Teil des Flusses entspricht; wenigstens 80 % des Einspeisungsflusses (F₁), der gereinigtes Wasser ist, das ohne Reinigung in natürlichem Milieu nicht annehmbar ist,
- am Kopf entnimmt man einen Fluss, der wenigstens 5 % des Einspeisungsflusses (F₁) darstellt, der an leichten Verunreinigungen sehr konzentriert ist,
- am Boden entnimmt man einen Fluss (F₃), der im Wesentlichen das aromatische Amin umfasst, das wenigstens 15 % des Einspeisungsflusses (F₁) darstellt.

15. Verfahren nach einem der Ansprüche 1 bis 14, **dadurch gekennzeichnet, dass** man den größten Teil der organischen Verunreinigung und des Ammoniaks in weniger als 5 % des Flusses konzentriert.

## Claims

1. Method for treatment of an aqueous effluent *(F₁)* comprising an aromatic amine and light organic impurities which are aromatic rings or not, substituted or not by amine, ketone or alcohol functions, which result from the decomposition of the aromatic amine and are jointly produced during hydrogenation or perhydrogenation reactions of the aromatic ring of the aromatic amine and correspond to a TOC content of less than 1% by weight, **characterised in that** the flow *(F₁)* is subjected to a distillation operation designed to obtain:
- at the distillation foot, a liquid flow *(F₃)* of an aqueous solution of the aromatic amine,
- at the distillation head, a gaseous flow *(F₂)* comprising these light organic impurities,
- in an upper zone for the supply of the flow *(F₁)*, a liquid flow *(F₄)* of purified water.

2. Method according to claim 1, **characterised in that** the aqueous effluent comprises at least one aromatic amine of formula (II): 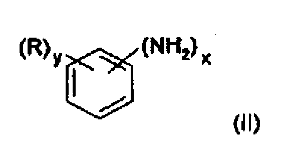 in which formula,
- x is a number from 1 to 3.
- y is a number from 0 to 4,
- the groups R, identical or different, represent a linear or branched alkyl or alkoxy group, having from 1 to 12 carbon atoms, a hydroxyl group, a halogen atom, a trihalogenomethyl group.

3. Method according to claim 2, **characterised in that** the aqueous effluent comprises an aromatic amine corresponding to formula (II) in which R represents a linear or branched alkyl group, having from 1 to 4 carbon atoms, a chlorine atom, a fluorine atom, a trifluoromethyl group.

4. Method according to one of the claims 1 to 3, **characterised in that** the aqueous effluent comprises an aromatic amine corresponding to formula (II) in which x is equal to 1 or 2.

5. Method according to one of the claims 1 to 4, **characterised in that** the aqueous effluent comprises an aromatic amine corresponding to formula (II) in which y is equal to 0, 1 or 2.

6. Method according to one of the claims 1 to 5, **characterised in that** the aqueous effluent comprises an aromatic amine such as aniline, toluidine, p-isopropylaniline, chloroaniline, toluylenediamines, p-aminophenol, o-aminophenol, 2,4-difluororaniline, 3,4-dichloroaniline, 2,4-dichloroaniline.

7. Method according to one of the claims 1 to 6, **characterised in that** the aqueous effluent comprises a mixture of 2,4-toluenediamine and 2,6-toluenediamine and also impurities which result from perhydrogenation reactions of the aromatic ring and/or from hydrogenation of impurities which are jointly produced in the nitration and/or from hydrogenolysis of an amine function of TDA.

8. Method according to claim 7, **characterised in that** the aqueous effluent is obtained by catalytic hydrogenation of the corresponding mixture of 2,4-dinitrotoluene and of 2,6-dinitrotoluene which is obtained following the nitration of the toluene and leads to an aqueous solution of TDA which is subjected to a first distillation allowing water, ammonia solution and light organic impurities, traces of TDA to be obtained at the distillation head and, at the distillation foot, a mixture comprising essentially TDA.

9. Method according to one of the claims 1 to 8, **characterised in that** the aqueous flow *(F₁)* is subjected to a distillation operation at a temperature between 50°C and 115°C.

10. Method according to one of the claims 1 to 9, **characterised in that** the aqueous flow *(F₁)* is subjected to a distillation operation under a pressure between 0.3 bar and 1.5 bar, preferably under atmospheric pressure.

11. Method according to one of the claims 1 to 10, **characterised in that** the aqueous flow *(F₁)* is heated at the distillation foot in a heat exchanger by tapping a flow *(F₅)* which exits at the distillation foot and passes through a heat exchanger from bottom to top and which is, at the exchanger exit, introduced from the side into the lower part of the distillation column.

12. Method according to one of the claims 1 to 11, **characterised in that** the aqueous flow *(F₁)* is introduced either in liquid form or in vapour form or in vapour and liquid form.

13. Method according to one of the claims 1 to 12, **characterised in that**, in an upper zone for the supply of the aqueous flow *(F₁)*, a liquid flow *(F₄)* comprising water which can possibly be recycled is drawn off.

14. Method according to one of the claims 1 to 13, **characterised in that** three flows are separated:
- at the side, a liquid flow *(F₄)* corresponding to the majority of the flow is drawn off; at least 80% of the supply flow *(F₁)* which is discardable purified water, without treatment into the natural environment,
- at the head, a flow representing less than 5% of the supply flow *(F₄)* which is very concentrated in light impurities is drawn off,
- at the foot, a flow *(F₃)* comprising essentially the aromatic amine representing less than 15% of the supply flow *(F₁)* is drawn off.

15. Method according to one of the claims 1 to 14, **characterised in that** the majority of the organic pollution and of the ammonia solution is concentrated into less than 5% of the flow.
